# EUROPEAN PATENT SPECIFICATION

(11) **EP 0 763 681 B1**
(45) Date of publication and mention of the grant of the patent: **07.06.2000**
(21) Application number: 96202555.7
(22) Date of filing: 12.09.1996
(51) Int. Cl.: F16K 31/00, G05D 23/12

(54) **Radiator thermostat element**
Heizkörperthermostat
Thermostat pour radiateur de chauffage

(30) Priority: 15.09.1995 DE 19534186
(43) Date of publication of application: 19.03.1997
(73) Proprietor: Danfoss A/S, 6430 Nordborg (DK)
(72) Inventor: Frederiksen, Bjarne, 8600 Silkeborg (DK); Person, Stig Gron, 8462 Harlev J. (DK); Nissen, Morten Paasch, 8240 Risskov (DK); Andersen, Erik Haarbo, 8900 Randers (DK); Markvart, Arne, 8600 Silkeborg (DK)

(56) References cited:
- WO-A-92/07314
- DE-B- 1 127 120
- DE-B- 2 613 991

## Description

The invention relates to a radiator thermostat element having a housing and a pressure chamber arranged therein, which pressure chamber is enclosed by a capsule and into which a corrugated tube biased by a spring projects.

Such radiator thermostat elements can be in the form either of remote adjustment elements or of radiator thermostats which are arranged directly on the radiator. They almost always have a safety device which, as temperatures increase, prevents an accompanying increase in pressure in the pressure chamber leading to damage of the controlled valve or the thermostat element. Such a situation arises, for example, when the radiator valve is already fully closed but the temperature in the room continues to rise for other reasons.

In a known radiator thermostat element of the above-mentioned kind (EP 0 552 157 B1), the corrugated tube can be compressed against the force of a spring which is clamped between the end of the corrugated tube and the capsule. The volume of the pressure chamber therefore increases, so that thermal expansion of the fluid located therein does not cause subsequent damage.

Mounting of such thermostat elements is often relatively complicated, however, and therefore expensive. Processes such as flanging or soldering are time-consuming, which also makes production more expensive. Moreover, with these two processes there is a risk of a relatively high reject rate. In the case of soldering, it is moreover observed that the soldered metal parts move apart when they are being heated during soldering, so that additional undesirable variations occur which later have to be compensated for.

The invention is therefore based on the problem of constructing a safety device in a radiator thermostat element in such a manner that it can be mounted simply and with low undesirable variations.

In a radiator thermostat element of the kind mentioned in the introduction, that problem is solved in that inside the corrugated tube there is arranged a plunger on which the spring acts and which bears with one end against the base of the corrugated tube, and in that between the other end of the plunger and the spring there is clamped a retaining element which is arranged in a seat in a housing element.

Simple mounting of the safety device, which is readily reproducible, that is, has relatively low undesirable variations, can be achieved through this construction. The retaining element is clamped between the end of the plunger and the spring. It is therefore acted on from both sides. If the pressure in the pressure chamber now rises, the corrugated tube can be compressed, the spring bearing against the retaining element. As this happens, the plunger can be displaced, becoming separated from the retaining element. The retaining element on the other hand is pressed into the seat in the housing element. If the pressure then eases again, the spring presses the plunger back into its starting position, in which it again rests with its end against the retaining element. In this manner the corrugated tube too is again extended to its original length. Despite the presence of the spring, the movement of the plunger is therefore limited. Even in the normal state, in which the function of the safety device is not needed, the retaining element remains in the seat in the housing element because in the pressure chamber there is always a certain pressure which acts by way of the corrugated tube on the spring. The spring, on the other hand, has the required force even in that state and, as already mentioned above, presses the retaining element into the seat. Installation is effected simply in that the retaining element is inserted between the spring and the end of the plunger. For that purpose a temporary compression of the spring is required. As soon as the spring has relaxed again, the retaining element is clamped in. The adjustment plate and the plunger require merely to be matched to one another in order to achieve low undesirable variations. This is relatively easy to do, however.

The housing element is preferably displaceable in the direction in which the spring acts. The housing element can be, for example, an adjusting plate, with which the desired value for the thermostat element is preset. The safety device then serves at the same time for presetting the size of the pressure chamber. When the housing element is displaced further in the direction towards the pressure chamber, the corrugated tube is expanded further into the inside of the pressure chamber and vice versa. In each case the safety effect of the safety device is directly maintained.

The plunger is preferably in the form of a tube in which the spring is arranged. On the one hand the corrugated tube is therefore protected. The corrugated tube can bear over its inner surface against the plunger. On the other hand, the spring is guided so that the risk of damage to the corrugated tube is kept low. This risk is otherwise present, in particular during assembly. The plunger protects the corrugated tube against the spring in operation as well, so that the service life is extended.

The retaining element is preferably in the form of a pin which is pushed through the plunger. Pins can also be mass-produced with relatively great accuracy. The insertion of a pin into the plunger is relatively trouble-free and inexpensive from the point of view of installation.

It is here especially preferred for the plunger for receiving the pin to have a slot which extends axially for a predetermined length. In this manner movement of the plunger with respect to the pin is limited in two directions. Moreover, the plunger is guided on the pin.

At its end receiving the retaining element the plunger preferably has an enlarged external diameter. The plunger is therefore able to rest against the side of the housing element remote from the pressure chamber so that the plunger is held here reliably.

The enlarged external diameter is in that case preferably formed by a circumferential projection. Such a projection can be produced easily by a shaping technique.

The plunger and the spring advantageously project from the corrugated tube. This facilitates assembly.

The plunger and/or the housing element are especially advantageously made of a plastics material. Plastics material parts can also be manufactured as mass products with the desired accuracy, for example, by injection moulding. The accuracy requirements remain restricted substantially to the fact that all parts are affected by the same undesirable variations. The use of a plastics material for these parts moreover has the advantage that heat conduction by way of the plunger or the housing element remains small, because plastics materials are generally poorer heat conductors than metals.

The seat is preferably formed by a groove. In this manner the retaining element, in particular when it is in the form of a pin, is also fixed in the housing element against lateral forces. Although these are unlikely to occur in operation, they will occur during transport and during assembly. The spring presses the retaining element into the groove. The construction is thus self-locking or self-holding.

The invention is described in greater detail hereinafter with reference to a preferred embodiment, in conjunction with the drawings, in which:
- Fig. 1: shows, in section, a radiator thermostat element which is in the form of a remote transmission element,
- Fig. 2: shows the thermostat element with the safety device activated,
- Fig. 3: shows details of the safety device, and
- Fig. 4: is a plan view of the safety device according to Fig. 3.

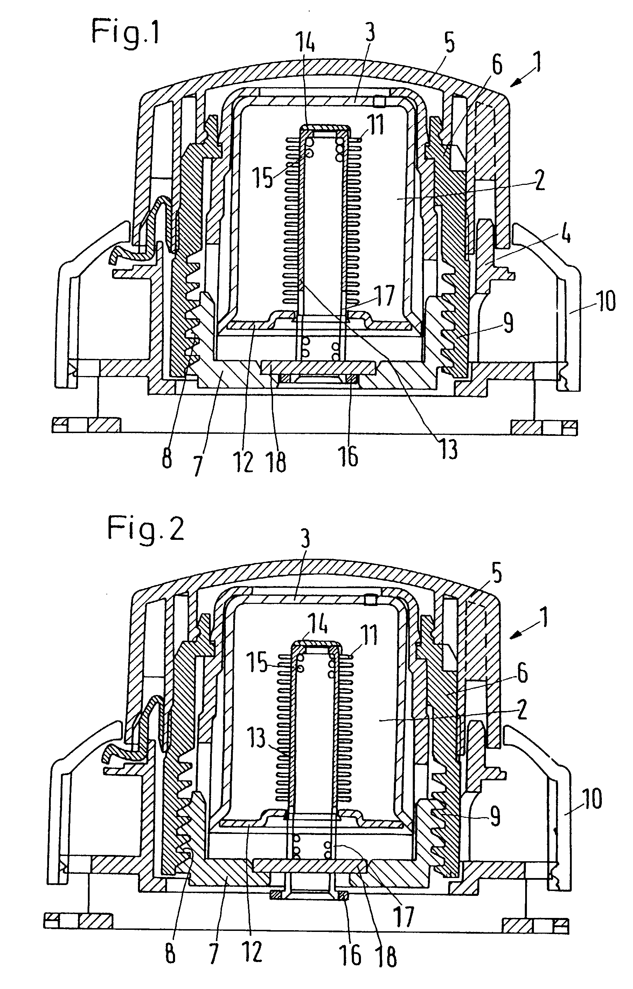

Figs 1 and 2 show a remote adjustment element 1 which is in connection by way of a capillary tube, not illustrated, with an actuating top part, likewise not illustrated, for a radiator valve. The remote adjustment element 1 is in the form of a thermostat element. For that purpose it has a pressure chamber 2 which is enclosed by a capsule 3, which in its turn is arranged in a housing which comprises a housing base 4, a rotary knob 5 with transmission element 6 and an adjustment plate 7 which is arranged in the housing base so that it does not rotate yet is axially displaceable. The adjustment plate 7 has a thread 9 which engages with a complementary counter-thread 9 in the transmission element. When the rotary knob 5 is turned, the adjustment plate 7 is therefore displaced towards the capsule 3 or away from it.

A cover 10 which encloses the housing is additionally provided.

A corrugated tube 11 projects into the pressure chamber 2. The pressure chamber 2 is therefore bounded by the capsule 3, which has a capsule base 12, and the corrugated tube 11. The volume of the pressure chamber 2 can be altered as the corrugated tube 11 extends to a greater or lesser extent into the pressure chamber 2.

Inside the corrugated tube 11 there is arranged a plunger 13 which extends to the base 14 of the corrugated tube. The plunger 13 is constructed as a tube with a partly closed base. Inside it there is arranged a spring 15 in the form of a compression spring which bears against the base of the tube.

Both the plunger 13 and the spring 15 are lead out of the corrugated tube. At the lead-out end, the plunger has a circumferential projection 16 which constitutes a diameter enlargement. Adjacent to the projection 16 there is a slot 17 in the wall of the plunger 13 through which a pin 18 is passed. The pin 18 is held tightly or clamped between the adjustment plate 7 and the spring 15. The pin 18 is arranged in a groove 19 in the adjustment plate 7.

Both the adjustment plate 7 and the plunger 13 are made from a plastics material. They can be produced, for example, by injection-moulding, so that they can be reproduced with good and satisfactory consistency. The undesirable variations can thus be kept low. Moreover, heat conduction through the plunger 13 and the corrugated tube 11 into the pressure chamber 2 is relatively slight.

The corrugated tube 11 is able to bear against the plunger 13 virtually over its entire length and with its base 14. It is therefore relatively well protected.

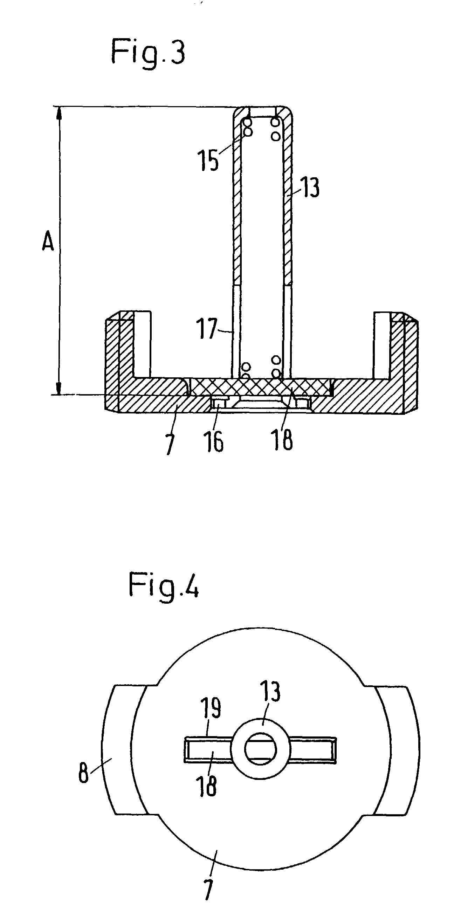

Assembly of the safety device illustrated in greater detail in Fig. 3 is comparatively simple. The spring 15 merely has to be introduced into the plunger 13. The spring must then be compressed a little so that the pin 18 can be introduced into the slot. This does not present problems, however, because next to the pin inside the plunger 13 there is nothing other than the spring 15. As soon as the pin 18 has been inserted, the entire unit can be inserted in the adjustment plate 7 and that unit in turn can be inserted in the remote adjustment device 1, the plunger 13 projecting into the corrugated tube 11.

In operation, by turning the rotary knob 5 the distance between the adjustment plate 7 and the capsule 3 is altered, so that by means of the plunger 13 and the corrugated tube 11 the volume of the pressure chamber 2 is also altered in order to preset a required desired value.

If the pressure in the pressure chamber 2 should rise and overcome the force of the spring 15, the corrugated tube 11 is pressed downwards. In this manner the plunger 13 is also pressed towards the adjustment plate 7. Then, as illustrated in Fig. 2, it is able to draw itself away from the pin 18 and thus yield. The pin 18 in its turn is pressed harder into the adjustment plate 7 by the spring 15, which is then under greater compression. The volume of the pressure chamber 2 increases. The pressure drops.

Even without an overpressure in the pressure chamber 2, the pin 18 remains reliably held in the adjustment plate 7. It is held laterally by the groove 19. It is also pressed axially into the adjustment plate 7 by the pressure in the pressure chamber 2.

Because relatively few assembly steps are required and both the plunger 13 and the adjustment plate are made of plastics material, the distance A (Fig. 3) can be kept constant with very low undesirable variations even with large piece numbers. Because the distance A can be measured, preliminary adjustment measures can be made before the thermostat element is assembled.

## Claims

1. Radiator thermostat element having a housing and a pressure chamber (2) arranged therein, which pressure chamber (2) is enclosed by a capsule (3) and into which a corrugated tube (11) biased by a spring (15) projects, characterized in that inside the corrugated tube (11) there is arranged a plunger (13) on which the spring (15) acts and which bears with one end against the base (14) of the corrugated tube, and in that between the other end of the plunger (13) and the spring (15) there is clamped a retaining element (18) which is arranged in a seat (19) in a housing element (7).

2. Thermostat element according to claim 1, characterized in that the housing element (7) is displaceable in the direction in which the spring (15) acts.

3. Thermostat element according to claim 1 or 2, characterized in that the plunger (13) is in the form of a tube in which the spring (15) is arranged.

4. Thermostat element according to one of claims 1 to 3, characterized in that the retaining element (18) is in the form of a pin which is pushed through the plunger (13).

5. Thermostat element according to claim 4, characterized in that the plunger (13) for receiving the pin (18) has a slot (17) which extends axially for a predetermined length.

6. Thermostat element according to one of claims 1 to 5, characterized in that, at its end receiving the retaining element (18), the plunger (13) has an enlarged external diameter (16).

7. Thermostat element according to claim 6, characterized in that the enlarged external diameter (16) is formed by a circumferential projection.

8. Thermostat element according to one of claims 1 to 7, characterized in that the plunger (13) and the spring (15) project from the corrugated tube (11).

9. Thermostat element according to one of claims 1 to 8, characterized in that the plunger (13) is made of a plastics material.

10. Thermostat element according to one of claims 1 to 9, characterized in that the housing element (7) is made of a plastics material.

11. Thermostat element according to one of claims 1 to 10, characterized in that the seat (19) is formed by a groove.

## Patentansprüche

1. Heizkörper-Thermostatelement mit einem Gehäuse und einem darin angeordneten Druckraum (2), der von einer Kapsel (3) umschlossen ist und in den ein durch eine Feder (15) vorgespanntes Wellrohr (11) hineinragt, dadurch gekennzeichnet, daß ein Stößel (13) im Innern des Wellrohres (11) angeordnet ist, auf den die Feder (15) wirkt und der mit einem Ende am Boden (14) des Wellrohres anliegt, und daß zwischen dem anderen Ende des Stößels (13) und der Feder (15) ein Halteelement (18) eingespannt ist, das in einer Aufnahme (19) in einem Gehäuseelement (7) angeordnet ist.

2. Thermostatelement nach Anspruch 1, dadurch gekennzeichnet, daß das Gehäuseelement (7) in Wirkrichtung der Feder (15) verstellbar ist.

3. Thermostatelement nach Anspruch 1 oder 2, dadurch gekennzeichnet, daß der Stößel (13) als Rohr ausgebildet ist, in dem die Feder (15) angeordnet ist.

4. Thermostatelement nach einem der Ansprüche 1 bis 3, dadurch gekennzeichnet, daß das Halteelement (18) als Stift ausgebildet ist, der durch den Stößel (13) gesteckt ist.

5. Thermostatelement nach Anspruch 4, dadurch gekennzeichnet, daß der Stößel (13) zur Aufnahme des Stiftes (18) einen Schlitz (17) aufweist, der sich über eine vorbestimmte Länge in Axialrichtung erstreckt.

6. Thermostatelement nach einem der Ansprüche 1 bis 5, dadurch gekennzeichnet, daß der Stößel (13) an seinem das Halteelement (18) aufnehmenden Ende einen vergrößerten Außendurchmesser (16) aufweist.

7. Thermostatelement nach Anspruch 6, dadurch gekennzeichnet, daß der vergrößerte Außendurchmesser (16) durch einen umlaufenden Vorsprung gebildet ist.

8. Thermostatelement nach einem der Ansprüche 1 bis 7, dadurch gekennzeichnet, daß der Stößel (13) und die Feder (15) aus dem Wellrohr (11) herausragen.

9. Thermostatelement nach einem der Ansprüche 1 bis 8, dadurch gekennzeichnet, daß der Stößel (13) aus einem Kunststoff gebildet ist.

10. Thermostatelement nach einem der Ansprüche 1 bis 9, dadurch gekennzeichnet, daß Gehäuseelement (7) aus einem Kunststoff gebildet ist.

11. Thermostatelement nach einem der Ansprüche 1 bis 10, dadurch gekennzeichnet, daß die Aufnahme (19) durch eine Nut gebildet ist.

## Revendications

1. Élément thermostatique pour radiateur, comportant un boîtier et une chambre de pression (2) ménagée dans celui-ci, ladite chambre de pression (2) étant enfermée par une capsule (3), et un tube ondulé (11) repoussé par un ressort (15) se projette dans ladite chambre de pression,
caractérisé en ce que, à l'intérieur du tube ondulé (11) est agencé un plongeur (13), sur lequel agit le ressort (15) et qui porte par une extrémité contre la base (14) du tube ondulé, et en ce qu'un élément de retenue (18), agencé dans un siège (19) dans un élément de boîtier (7), est pincé entre l'autre extrémité du plongeur (13) et le ressort (15).

2. Élément thermostatique selon la revendication 1, caractérisé en ce que l'élément de boîtier (7) et déplaçable dans la direction dans laquelle agit le ressort (15).

3. Élément thermostatique selon l'une ou l'autre des revendications 1 et 2, caractérisé en ce que le plongeur (13) a la forme d'un tube, dans lequel est agencé le ressort (15).

4. Élément thermostatique selon l'une des revendications 1 à 3, caractérisé en ce que l'élément de retenue (18) a la forme d'une tige qui est poussée à travers le plongeur (13).

5. Élément thermostatique selon la revendication 4, caractérisé en ce que le plongeur (13), pour recevoir la tige (18), comporte une fente (17) qui s'étend axialement sur une longueur prédéterminée.

6. Élément thermostatique selon l'une des revendications 1 à 5, caractérisé en ce que, à son extrémité qui reçoit l'élément de retenue (18), le plongeur (13) a un diamètre externe élargi (16).

7. Élément thermostatique selon la revendication 6, caractérisé en ce que le diamètre externe élargi (16) est formé par une projection circonférentielle.

8. Élément thermostatique selon l'une des revendications 1 à 7, caractérisé en ce que le plongeur (13) et le ressort (15) se projettent depuis le tube ondulé (11).

9. Élément thermostatique selon l'une des revendications 1 à 8, caractérisé en ce que le plongeur (13) est réalisé en matière plastique.

10. Élément thermostatique selon l'une des revendications 1 à 9, caractérisé en ce que l'élément de boîtier (7) est réalisé en matière plastique.

11. Élément thermostatique selon l'une des revendications 1 à 10, caractérisé en ce que le siège (19) est formé par une gorge.
